## Europäisches Patentamt
## European Patent Office
## Office européen des brevets

(19)

(11) Veröffentlichungsnummer: **0 219 566**
**B1**

(12) **EUROPÄISCHE PATENTSCHRIFT**

(45) Veröffentlichungstag der Patentschrift:
**11.01.89**

(51) Int. Cl.⁴: **F24J 2/40**, F24J 2/34,
F24D 19/10, F24D 17/00

(21) Anmeldenummer: 85113366.0

(22) Anmeldetag: 22.10.85

(54) Vorrichtung zum Erwärmen von Brauchwasser mittels Sonnenenergie.

(43) Veröffentlichungstag der Anmeldung:
**29.04.87 Patentblatt 87/18**

(45) Bekanntmachung des Hinweises auf die Patenterteilung:
**11.01.89 Patentblatt 89/2**

(84) Benannte Vertragsstaaten:
**AT BE CH DE FR GB IT LI LU NL SE**

(56) Entgegenhaltungen:
FR-A- 2 354 522
FR-A- 2 508 150
GB-A- 2 151 012
US-A- 3 052 228

(73) Patentinhaber: **Bomin-Solar GmbH & Co KG,
Industriestrasse 8-10, D-7850 Lörrach(DE)**

(72) Erfinder: **Kleinwächter, Jürgen, Dipl.-Phys., Egisholz
Lindenstrasse 15, D-7842 Kandern(DE)**

(74) Vertreter: **Rau, Manfred, Dr. Dipl.-Ing. et al, Rau &
Schneck, Patentanwälte Königstrasse 2,
D-8500 Nürnberg 1(DE)**

**Beschreibung**

Die Erfindung richtet sich auf eine Vorrichtung zum Erwärmen von Brauchwasser mittels Sonnenenergie gemäß dem Oberbegriff von Anspruch 1.

Eine derartige Vorrichtung ist aus der US-A 3 052 228 bekannt. Bei der vorbekannten Vorrichtung läßt sich der Wasserstand mit Hilfe einer Einstelleinrichtung manuell einstellen. Auslaßseitig ist lediglich ein Wasserhahn vorgesehen, welcher die Entleerung des Behälters unter dem Einfluß der Schwerkraft des darin befindlichen erwärmten Wassers möglich macht.

Die vorbekannte Vorrichtung mag für gewisse Einsatzbereiche, wie z.B. für Campingzwecke, ausreichend sein.

Sie wird dann aber den Anforderungen nicht mehr gerecht, wenn es darum geht, warmes Brauchwasser in größeren Mengen zur Einspeisung in Haushalts-Brauchwassersysteme zu erzeugen, also eine wirkliche Alternative zu konventionellen Warmwasser-Systemen zu schaffen.

Hiervon ausgehend liegt der Erfindung die Aufgabe zugrunde, eine Vorrichtung der eingangs genannten Art so auszugestalten, daß sie kommerziellen Anforderungen gerecht wird und auch hohe Ansprüche an Betriebssicherheit, Wirkungsgrad und Vereinbarkeit mit bestehenden Systemen befriedigt.

Diese Aufgabe wird gelöst gemäß dem kennzeichnenden Teil von Anspruch 1.

Durch diese erfindungsgemäße Ausgestaltung wird es möglich, Brauchwasser gewünschter Temperatur zur Verfügung zu stellen, wobei insbesondere vermieden wird, daß bei schwacher Sonneneinstrahlung im Anschluß an die Entnahme einer größeren Menge Brauchwasser eine zu lange Zeit vergeht, bis wieder Wasser der gewünschten Temperatur zur Verfügung steht. Die erfindungsgemäß vorgesehene auslaßseitige Pumpe ermöglicht es in Verbindung mit dem Rückschlagventil das erwärmte Brauchwasser auch in ein unter Druck stehendes Warmwasserversorgungsnetz einzuspeisen. Auf diese Weise ist eine erfindungsgemäße Vorrichtung bei entsprechender Dimensionierung je nach klimatischem Standort zur teilweisen oder vollständigen Versorgung von Autowaschanlagen, Hotels, Gaststätten und dgl. mit warmem Brauchwasser geeignet.

Erfindungsgemäß kann weiterhin vorgesehen sein, daß der Entnahmeöffnung ein in das Innere des Behälters führender, flexibler Schlauch vorgeordnet ist, dessen freies Ende mit einem Schwimmer derart verbunden ist, daß die Schlauchöffnung knapp unterhalb der Wasseroberfläche in dem Behälter liegt. Hierdurch wird erreicht, daß stets nur Wasser aus dem Oberflächenbereich entnommen wird. Dieses Wasser ist aufgrund der geringeren Dichte wärmeren Wassers und der sich dementsprechend einstellenden Temperaturverteilung des Wassers in dem Behälter wärmer als das Wasser im Bodenbereich.

Gemäß einer weiteren vorteilhaften Maßnahme ist vorgesehen, daß in dem Behälter ein dichtend nach außen geführter Entlüftungsschlauch angeordnet ist, wobei die freie Schlauchöffnung mit einem Schwimmer derart verbunden ist, daß sie etwas oberhalb der Wasseroberfläche in dem Behälter liegt. Auf diese Weise wird eine zuverlässige Belüftung und damit die Vermeidung von Überdruck gewährleistet, ohne daß Wasser nach außen gelangen kann, wenn die Behälterfolie mit Druck beaufschlagt wird. Dementsprechend kann auch die Ausbildung von Kalkablagerungen unterbunden werden, was die Transparenz des Behälters beeinträchtigen würde.

Günstigerweise sind die Stirnseiten des Behälters durch starre, flächige Endleisten mit Befestigungseinrichtungen für die Kunststoff-Folie ausgebildet. An derartigen Endleisten lassen sich verschiedene Einrichtungen, wie z.B. Schalter od.dgl. anbringen. Gleichzeitig ermöglichen es derartige Endleisten Behälter beliebiger Länge aus einem endlos hergestellten Folienschlauch herzustellen. Günstigerweise sind die Befestigungseinrichtungen in Form von Klemmleisten ausgebildet, welche aus Kunststoff hergestellt werden können und eine wasserdichte Festlegung des Kunststoffschlauches ermöglichen.

In den Endleisten sind darüber hinaus die Ein- und Auslaßöffnungen ausgebildet, und zwar vorzugsweise in Form horizontaler Schlitze. Auf diese Weise wird beim Aus- und Einströmen von Wasser die Temperaturbeschichtung in dem Behälter, welche erfindungsgemäß ausgenutzt wird, nicht gestört, da ein weitgehend laminares Strömungsverhalten erzielt wird.

Mit besonderem Vorteil ist z.B. in einer Endleiste ein Füllstands-Endschalter angeordnet, welcher den Zulauf von Kaltwasser spätestens dann unterbindet, wenn ein gewisser Maximal-Füllstand erreicht ist.

Zur Vermeidung einer Wärmeabstrahlung von dem Behälter und zur Vermeidung einer Abkühlung durch Wind kann eine UV-transparente Abdeckung für den Behälter vorgesehen sein. Durch diese UV-Transparenz wird nicht nur das für die Einstrahlung zur Verfügung stehende Sonnenspektum optimal ausgenutzt, sondern die in das Wasser gelangenden UV-Strahlen weisen darüber hinaus eine keimtötende Wirkung auf, so daß das für den Verbrauch vorgesehene Wasser weitgehend desinfiziert wird.

Je nach der geografischen Lage und den dementsprechend zu erwartenden Klimaverhältnissen kann vorgesehen sein, daß die Abdeckung mehrere Lagen transparenter Folie umfaßt, um eine Konvektion und damit eine Abkühlung zu verhindern. Dadei ist insbesondere bei einer derartigen mehrlagigen Ausführung vorgesehen, daß die Folien der Abdeckung durch einen Rahmen gespannt und gehalten werden.

Eine alternative Möglichkeit zur Realisierung einer Abdeckung besteht darin, daß die Abdeckung selbsttragend ausgebildet wird, d.h. durch eine Pumpe wird die in sich weitgehend geschlossene Abdeckung aufgeblasen. Bei dieser Lösungsmöglichkeit kann die Abdeckung durch gezieltes Ausschalten der Pumpe zur Anlage an dem Behälter gebracht werden. Dies ist dann günstig, wenn die erfindungsgemäße Vorrichtung als Absorber für eine Wärmepumpe verwendet wird.

Es hat sich gezeigt, daß durch die Verwendung von Kobaltblau zur Realisierung der dunklen Unterseite des Folienschlauchs, aus welchem der Behälter gebildet wird, nicht nur eine anprechende ästhetische Gestaltung erzielbar ist, sondern daß darüber hinaus auch eine sehr gute Absorption erreicht wird.

Die erfindungsgemäße Konstruktion ermöglicht es, im Inneren des Behälters längs der Behälterwandung oberhalb des Wasserspiegels nach außen führende Auffangrinnen anzuordnen. Diese Auffangrinnen fangen Kondenswasser auf, so daß dieses Wassers als hochreines praktisch destilliertes Wasser für eine entsprechende Verwendung abgezogen werden kann. Bei dieser Ausgestaltung wird durch Einblasen von Luft in den Behälter oder durch selbsttragende Ausgestaltung des Behälters in Verbindung mit einer entsprechenden Füllstandsregelung dafür gesorgt, daß oberhalb des Wasserspiegels stets ein ausreichendes Luftpolster verbleibt.

Eine erfindungsgemäße Vorrichtung umfaßt verschiedene hydraulische Komponenten ebenso wie elektrische Schalter, Einstell- und Anzeigeeinrichtungen. Bei dem Einsatz von Regel- und Steuereinrichtungen der in Betracht stehenden Art für die Warmwasserbereitung mittels Sonnenkollektoren ist davon auszugehen, daß die Verhältnisse in technisch unterentwickelten Ländern berücksichtigt werden müssen. Dies bedeutet, daß Montage und Service leicht durchführbar sein müssen, und daß ein guter Schutz gegen ungünstige Umweltbedingungen, wie z.B. hohe Hitze, gegeben sein muß. Erfindungsgemäß ist deshalb weiterhin eine Steuer- und Regeleinrichtung vorgesehen, wobei deren Gehäuse aus zwei Spritzgußschalen besteht, und wobei in den Schalen komplementäre Formausnehmungen derart ausgebildet sind, daß beim Zusammenfügen der Schalen zwischen in entsprechende Formausnehmungen einsetzbare funktionelle Einrichtungen, wie Ventile, Pumpen und dgl., Leitungen für das flüssige Medium entstehen.

Die erfindungsgemäße Ausgestaltung ermöglicht eine schnelle, einfache, fehlervermeidende, kostengünstige Montage, weil zusätzlich zu den äußeren Gehäuseschalen keine internen Halterungen vorgesehen oder Verbindungen durch Schrauben, Klemmen od.dgl. hergestellt werden müssen. Die Position der einzelnen Bauteile ist aufgrund der entsprechenden Formausnehmungen zwingend vorgegeben, so daß die Montage auch durch nicht fachmännisches Personal vorgenommen werden kann. Letztlich kann die Erstellung von Rohrverbindungen vollständig entfallen, weil die Flüssigkeitsleitungen in den Gehäuseschalen selbst ausgebildet sind.

Ein weiterer wesentlicher Vorteil der erfindungsgemäßen Konstruktion besteht darin, daß die beiden für sich jeweils einstückigen Schalen sehr stabil sind und dementsprechend stoßdämpfend für die darin untergebrachten Teile wirken. Darüber hinaus wird eine thermische Isolierung erreicht, so daß vor allem auch in den Schalen untergebrachte elektrische Einheiten gegen intensive Sonneneinstrahlung geschützt werden. Schließlich ist es möglich, eine derartige Regel- und Steuereinrichtung insgesamt äußerst kompakt und platzsparend aufzubauen und alle wesentlichen Elemente in ein und demselben Gehäuse geschützt unterzubringen.

Vorteilhafterweise kann vorgesehen sein, daß zwischen die Schalen längs der Formausnehmungen Dichtschnüre eingelegt werden. Hierdurch wird eine zuverlässige Abdichtung der Flüssigkeitsleitungen erzielt.

Alternativ hierzu ist es auch möglich, zwischen die Schalen entsprechend den Formausnehmungen ausgesparte Dichtungsmasken einzulegen.

Schließlich kann erfindungsgemäß noch vorgesehen sein, daß an den Enden der Formausnehmungen Ringnuten zum Einsetzen von Dichtungen senkrecht zur Trennungsebene der Schalen vorgesehen sind. Diese Dichtungen können dazu dienen, eine Dichtverbindung zwischen in Formausnehmungen eingesetzte Teile, wie Pumpen oder Ventile, herstellen.

Weitere Merkmale, Vorteile und Einzelheiten der Erfindung ergeben sich aus der folgenden Beschreibung eines bevorzugten Ausführungsbeispiels anhand der Zeichnung. Dabei zeigen

Fig. 1 eine schematische, schaltbildartige Seitenansicht einer erfindungsgemäßen Vorrichtung,

Fig. 2 eine grafische Darstellung des Temperaturverlaufs in Abhängigkeit von der Zeit und von Brauchwasserentnahmen,

Fig. 3 eine schematische Schnittdarstellung des Behälters der erfindungsgemäßen Vorrichtung mit Entnahme- und Belüftungseinrichtungen,

Fig. 4 eine Ansicht einer erfindungsgemäßen Endleiste des Behälters von außen,

Fig. 5 eine Fig. 4 entsprechende Ansicht von innen,

Fig. 6 einen Schnitt längs der Linie C–D in Fig. 4,

Fig. 7 einen Schnitt längs der Linie A–B in Fig. 4,

Fig. 8 einen schematischen Schnitt durch eine Abdeckung für eine erfindungsgemäße Vorrichtung,

Fig. 9 einen vergrößerten, teilweisen Schnitt des Bereiches X in Fig. 8,

Fig. 10 eine Abdeckung gemäß Fig. 8 für einen Behälter mit größerer Längserstreckung,

Fig. 11 bis 13 Teil-Schnittdarstellungen der Steuer- und Regeleinrichtung der erfindungsgemäßen Vorrichtung.

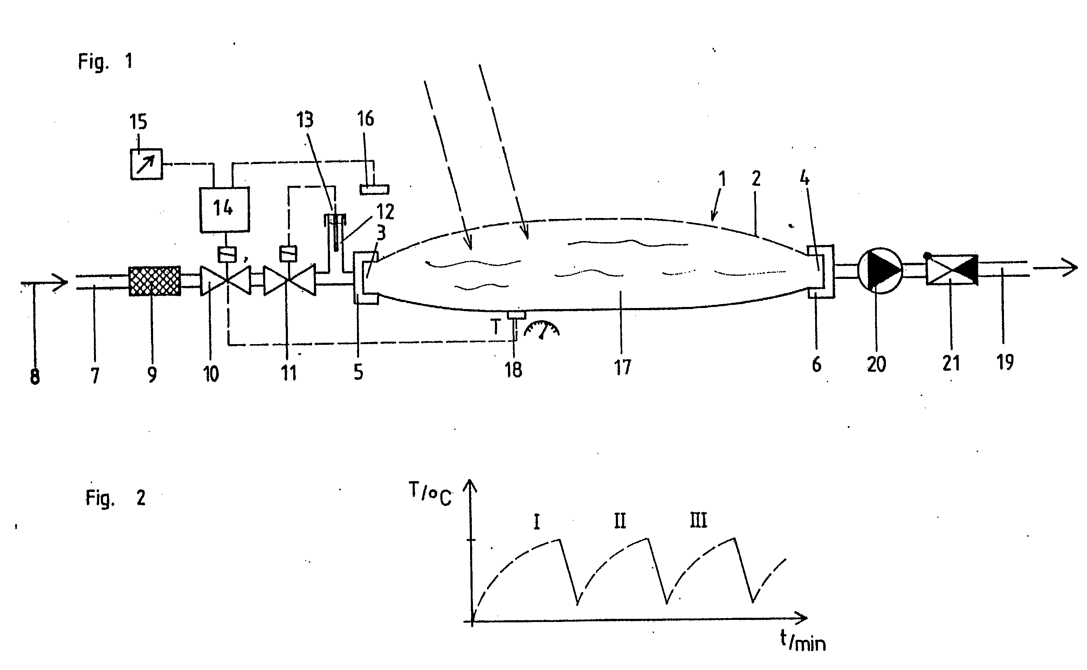

Die in Fig. 1 dargestellte Vorrichtung umfaßt einen Behälter 1, welcher gebildet ist durch einen endlos extrudierten Folienschlauch 2, dessen Öffnungen 3 und 4 jeweils durch eine Endleiste 5 und 6 abgeschlossen sind.

In der Zuleitung 7, in welcher in Richtung des Pfeils 8 Kaltwasser zufließt, ist ein Filter 9 angeordnet, welchem zwei elektromagnetisch betätigbare Ventile 10, 11 nachgeordnet sind. Das Ventil 11 wird in Abhängigkeit von einer Füllstandsmeßeinrichtung 12 mit einem im einzelnen nicht dargestellten Endschalter 13 so gesteuert, daß ein gewisser Maximalfüllstand nicht überschritten wird.

Das Ventil 10 wird in Abhängigkeit von einer Steuer- und Regeleinrichtung 14 betätigt, welche mit einer Einstelleinrichtung 15 für die gewünschte Brauchwassertemperatur und einer Meßeinrichtung 16 für die aktuelle Sonneneinstrahlungs-Intensität verbunden ist und so arbeitet, daß unabhängig von der durch das Ventil 11 bestimmten maximalen Füllstandshöhe der Füllstand so bemessen wird, daß er um so niedriger ist je geringer die momentane Wassertemperatur bzw. je höher die eingestellte gewünschte Brauchwassertemperatur ist. Die jeweilige Ist-Temperatur des Wassers 17 in dem Behälter 1 wird mittels eines Sensors 18, welcher mit der Regel- und Steuereinrichtung verbunden ist, ermittelt. Da diese Ist-Temperatur praktisch dem Integral der Sonneneinstrahlung entspricht, wird die Regelung der Füllstandshöhe im einfachsten Fall in Abhängigkeit von dieser Temperatur vorgenommen.

Der Endleiste 6 nachgeordnet ist eine Auslaßleitung 19 mit einer Pumpe 20 und einem Rückschlagventil 21. Durch die Kombination der Pumpe 20 bzw. des Rückschlagventils 21 mit der vorgesehenen Regelung wird es möglich, die erfindungsgemäße Vorrichtung vollwertig für die Brauchwasserversorgung auch größerer Objekte, wie Autowaschanlagen, Hotels und dgl. einzusetzen, da bei vorgegebener Brauchwassertemperatur eine Einspeisung in die Heißwasserversorgung, welche in der Regel einen höheren Druck aufweist, möglich ist.

In Fig. 2 ist der Verlauf der Temperatur T in Abhängigkeit von der Zeit t für verschiedene Entnahmezyklen I, II, III veranschaulicht.

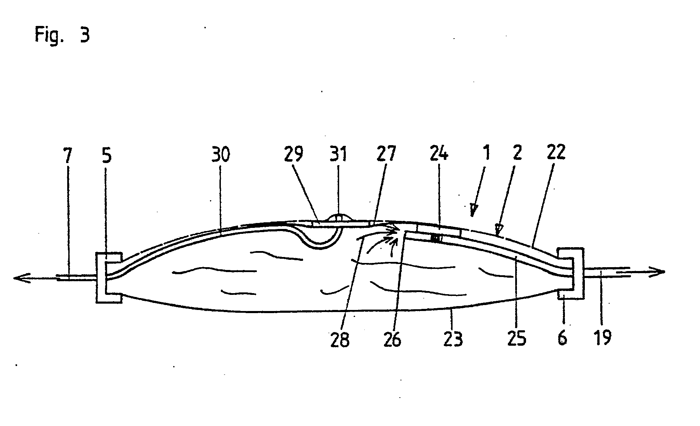

Fig. 3 zeigt schematisch den Behälter 1 ohne weitere Zusatzeinrichtungen. Dabei ist die oberseite 22 des Folienschlauches 2 gestrichelt gezeichnet, weil diese lichtdurchlässig ausgebildet ist, während die Unterseite 23 des Folienschlauches 2 mit einer lichtundurchlässigen Farbe, vorzugsweise kobaltblau, beschichtet ist. Um eine derartige Beschichtung zu ermöglichen, wird der Folienschlauch in diesem Bereich durch Elektroätzung aufgerauht, um eine zuverlässige Haftung der Farbe sicherzustellen.

Ein erster Schwimmer 24 ist mit einem flexiblen Schlauch 25 verbunden, welcher seinerseits mit der Auslaßleitung 19 über die Endleiste 6 verbunden ist. Der Schwimmer 24 hält die freie Öffnung 26 des Schlauches 25 knapp unterhalb der Oberfläche 27 des Wassers 17 in dem Behälter 1, so daß bei der Entnahme Wasser in Richtung der Pfeile 28 ausströmen kann. Auf diese Weise wird gewährleistet, daß die Temperaturschichtung des Wassers 17 in dem Behälter 1 derart ausgenutzt wird, daß jeweils nach Möglichkeit Wasser aus den wärmeren Zonen entnommen wird.

Ein weiterer Schwimmer 29 ist mit einem weiteren flexiblen Schlauch 30 verbunden, wobei das freie Ende 31 des Schlauches so über den Schwimmer 29 hinaussteht, daß durch dieses Ende 31 des Schlauches 30 eine Entlüftung erfolgen kann. Der Schlauch 30 ist durch die Endleiste 5 nach außen geführt. Auf diese Weise wird eine zuverlässige Entlüftung gewährleistet, ohne daß es erforderlich ist, den Folienschlauch 2 selbst mit einer Öffnung zu versehen.

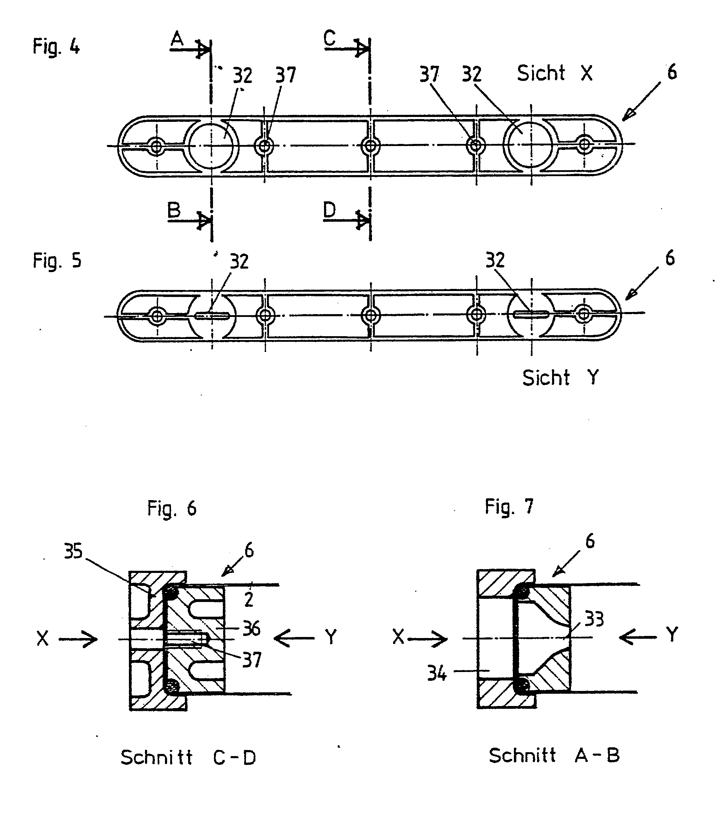

Die Fig. 4 bis 7 zeigen Darstellungen einer Endleiste, z.B. der Endleiste 6. Aus Fig. 5 wird deutlich, daß die mit der Leitung 19 verbundenen Entnahmeöffnungen 32 zur Innenseite des Behälters 1 hin als horizontale Schlitze 33 ausgebildet sind, welche sich nach außen hin zu im Querschnitt runden Öffnungen 34 aufweiten. Durch die Schlitzgeometrie wird eine geschichtete, laminare Entnahme ebenso wie Beschickung mit Kaltwasser ermöglicht.

Aus Fig. 6 und 7 ist weiterhin ersichtlich, daß die Endleiste 6 aus zwei Profilleisten 35, 36 besteht, zwischen welche der Folienschlauch 2 eingespannt ist. Die Verspannung erfolgt durch eine Mehrzahl von Schraubanordnungen 37.

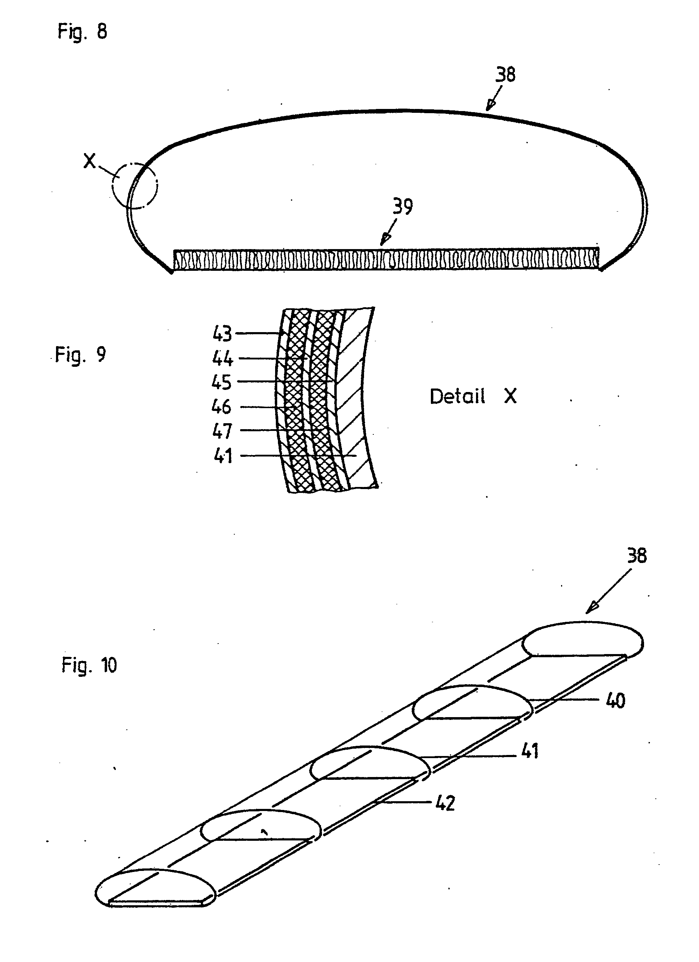

In Fig. 8 bis 10 ist eine Abdeckung 38 für den Behälter 1 dargestellt, welcher verhindern soll, daß durch Luftbewegung und Konvektion eine Abkühlung des erwärmten Wassers im Behälter eintritt. Die Unterseite der Abdeckung ist mit einer Wärmeisolierschicht 39 zur Auflagefläche hin verbunden. Die Oberseite der Abdeckung 38 ist aus einer oder einer Mehrzahl von Folien aufgebaut, welche im sichtbaren und im UV-Bereich durchlässig sind, und welche über ein lediglich schematisch dargestelltes Tragegestell 40 gespannt sind. Das Tragegestell 40 umfaßt eine Mehrzahl von Bogenträgern 41, welche durch Streben 42 miteinander verbunden sind.

Fig. 9 zeigt den Aufbau der Abdeckung 38 in einem Teilausschnitt X im Bereich eines Trägers 41. Bei dem dargestellten Ausführungsbeispiel sind drei parallel zueinander verlaufende Folien 43, 44, 45 vorgesehen, welche von dem Träger 41 aufgespannt und durch Gummischnüre 46, 47 auf Abstand gehalten werden. Im Rahmen der Erfindung kann je nach dem Klimabereich, in welchem die Vorrichtung zum Einsatz kommen soll, eine entsprechende Zahl von Folien übereinander vorgesehen sein, ohne daß die Grundkonstruktion irgendeiner Abwandlung bedarf.

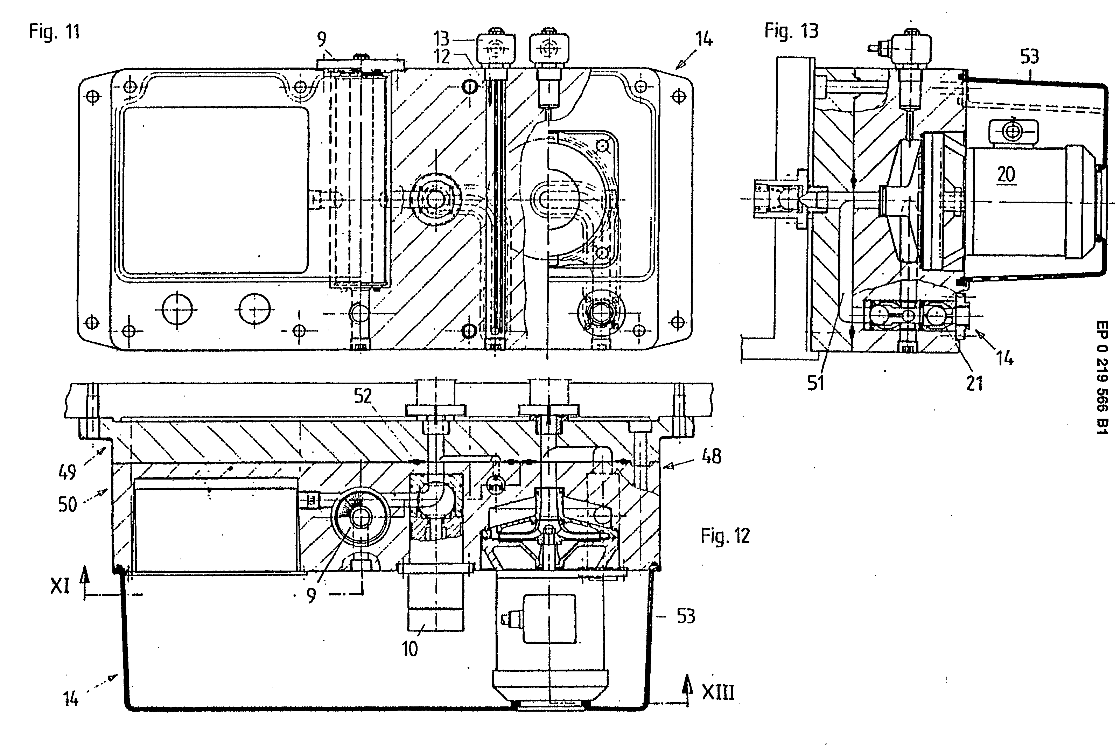

In Fig. 11 bis 13 ist eine erfindungsgemäße Regel- und Steuereinrichtung schematisch dargestellt. Das wesentliche an dieser Regel- und Steuereinrichtung liegt darin, daß das Gehäuse 48 aus zwei Schalen 49 und 50 besteht, welche jeweils einstückig im Spritzgußverfahren hergestellt sind. Jede Schale weist eine Mehrzahl von Formausnehmungen derart auf, daß beim Zusammenfügen der beiden Schalen 49, 50 Ausnehmungen zur Aufnahme der einzelnen Aggregate, wie z.B. der Pumpe 20 entstehen, und daß gleichzeitig die einzelnen Aggregate verbindende Flüssigkeitsleitungen, wie z.B. die Leitung 51 ausgebildet werden. Zwischen die Schalen 49, 50 sind Dichtschnüre 52 eingelegt, um verschiedene Formausnehmungen dichtend voneinander zu trennen. Hierdurch wird nicht nur eine besonders einfache Herstellung, sondern auch eine kostengünstige Montage erreicht, wobei darüber hinaus eine zuverlässige Abdämmung gegen Temperaturschwankungen und Stöße erzielt wird. Zum Schutz der über die Schalen 49, 50 hinausstehenden Aggregate kann noch zusätzlich eine Abdeckung 53 vorgesehen sein.

Die erfindungsgemäße Regel- und Steuereinrichtung 14 umfaßt sämtliche Meß- und Einstelleinrichtungen sowie elektrische und hydraulische Aggregate, so daß diese Einrichtung 14 unabhängig von der speziellen Ausgestaltung und Dimensionierung des Behälters 1 geliefert werden kann, wobei lediglich eine Anpassung hinsichtlich der Pumpengröße und dgl. vorgesehen werden kann.

## Patentansprüche

1. Vorrichtung zum Erwärmen von Brauchwasser mittels Sonnenenergie umfassend einen aus einer Kunststoff-Folie hergestellten Behälter (1) für das Brauchwasser, mit einer Kaltwasser-Einlaßöffnung (3) mit einem vorgeordneten Einlaßventil (10) und einer Entnahmeöffnung (4), wobei die im Betrieb oben liegende Seite des Behälters (1) transparent und die im Betrieb nach unten liegende Seite dunkel gefärbt ist, dadurch gekennzeichnet, daß der Entnahmeöffnung (4) eine Pumpe (20) und ein Rückschlagventil (21) nachgeordnet sind, daß das Einlaßventil (10) elektromagnetisch betätigbar ist, und daß mit dem Einlaßventil (10) ein Sensor (18) zur Einstellung der gewünschten Brauchwassertemperatur verbunden sind, wobei der Temperatur-Sensor (18) mit einer Regel- und Steureinrichtung (14) verbunden ist, welche das Einlaßventil (10) derart steuert, daß das Einlaßventil (10) um so mehr Kaltwasser in den Behälter (1) eintreten läßt je höher die durch den Temperatur-Sensor (18) gemessene momentane Wassertemperatur ist.

2. Vorrichtung nach Anspruch 1, dadurch gekennzeichnet, daß der Entnahmeöffnung (4) ein in das Innere des Behälters (1) führender, flexibler Schlauch (25) vorgeordnet ist, dessen freies Ende mit einem Schwimmer (24) derart verbunden ist, daß die Schlauchöffnung (26) knapp unterhalb der Wasseroberfläche (27) in dem Behälter (1) liegt.

3. Vorrichtung nach Anspruch 1, dadurch gekennzeichnet, daß in dem Behälter (1) ein dichtend nach außen geführter Entlüftungsschlauch (30) angeordnet ist, wobei die freie Schlauchöffnung (31) mit einem Schwimmer (29) derart verbunden ist, daß sie etwas oberhalb der Wasseroberfläche (27) in dem Behälter (1) liegt.

4. Vorrichtung nach Anspruch 1, dadurch gekennzeichnet, daß die Stirnseiten des Behälters (1) durch starre, flächige Endleisten (5, 6) mit einer Befestigungseinrichtung für die Kunststoff-Folie gebildet sind.

5. Vorrichtung nach Anspruch 4, dadurch gekennzeichnet, daß die Befestigungseinrichtungen durch Klemmleisten (35) gebildet sind.

6. Vorrichtung nach Anspruch 4, dadurch gekennzeichnet, daß in den Endleisten (5, 6) die Ein- bzw. Auslaßöffnungen (3 bzw. 4) angeordnet sind, welche als horizontale Schlitze ausgebildet sind.

7. Vorrichtung nach Anspruch 4, dadurch gekennzeichnet, daß ein Füllstands-Endschalter (13) vorgesehen ist.

8. Vorrichtung nach Anspruch 1, dadurch gekennzeichnet, daß der Behälter (1) von einer UVtransparenten Abdeckung überspannt wird.

9. Vorrichtung nach Anspruch 8, dadurch gekennzeichnet, daß die Abdeckung aus einer über einen Rahmen gespannten Kunststoff-Folie (2) besteht.

10. Vorrichtung nach Anspruch 9, dadurch gekennzeichnet, daß in den Rahmen wahlweise mehrere Lagen von Folien (2) einspannbar sind.

11. Vorrichtung nach Anspruch 8, dadurch gekennzeichnet, daß die Abdeckung durch einen inneren Überdruck getragen wird.

12. Vorrichtung nach Anspruch 1, dadurch gekennzeichnet, daß die dunkle Unterseite des Folienschlauchs kobaltblau gefärbt ist.

13. Vorrichtung nach Anspruch 1, dadurch gekennzeichnet, daß in dem Inneren des Behälters (1) längs der Behälterwandung oberhalb des Wasserspiegels nach außen führende Auffangrinnen angeordnet sind.

14. Vorrichtung nach Anspruch 1 mit einer Steuer- bzw. Regeleinrichtung für Flüssigkeitsströme, umfassend Einrichtungen wie elektrisch betätigbare Ventile, Pumpen und dgl., welche durch Flüssigkeitsleitungen verbunden sind, und ein diese Einrichtungen umgebendes Gehäuse (48), dadurch gekennzeichnet, daß das Gehäuse (48) aus zwei Spritzgußschalen (49, 50) besteht, wobei in den Schalen (49, 50) komplementäre Formausnehmungen derart ausgebildet sind, daß beim Zusammenfügen der Schalen (49, 50) Leitungen (51) entstehen.

15. Vorrichtung nach Anspruch 14, dadurch gekennzeichnet, daß zwischen die Schalen (49, 50) längs der Formausnehmungen Dichtschnüre (52) eingelegt sind.

16. Vorrichtung nach Anspruch 14, dadurch gekennzeichnet, daß zwischen die Schalen (49, 50) eine entsprechend den Formausnehmungen ausgesparte Dichtungsmaske eingelegt ist.

17. Vorrichtung nach Anspruch 1, dadurch gekennzeichnet, daß an den Enden der Formausnehmungen Ringnuten senkrecht zur Teilungsebene der Schalen zum Einsetzen von Dichtungen angeordnet sind.

## Claims

1. Device for heating industrial water with solar energy, consisting of a container (1) for the industrial water, made of plastic sheet, with an inlet opening for cold water (3) preceded an inlet valve (10) and with an extraction opening (4), whereby the side of the container (1) which faces up during operation is transparent and the side which faces down during operation has a dark colour, characterized in that a pump (20) and a check valve (21) are arranged following the extraction opening (4), that the inlet valve (10) can be activated electromagnetically, and that a sensor (18) for setting the desired temperature for the industrial water is connected to the inlet valve (10), whereby the temperature sensor (18) is connected to an open and closed loop control device (14) which controls the inlet valve (10) in such a manner that the amount of cold water permitted by the inlet valve (10) to enter the container (1) increases in proportion to the increase in the current water temperature as measured by the temperature sensor (18).

2. Device according to claim 1, characterized in that the extraction opening (4) is preceded by a flexible hose (25) leading into the interior of the container (1), the free end of this hose being connected to a float (24) in such a manner that the opening of the hose (26) is slightly below the surface of the water (27) in the container (1).

3. Device according to claim 1, characterized in that a sealing ventilation hose (30) led to the outside is arranged in the container (1), whereby the free opening of the hose (31) is connected to a float (29) in such a manner that the opening is slightly above the surface of the water (27) in the container (1).

4. Device according to claim 1, characterized in that the front sides of the container (1) consist of rigid, flat end strips (5, 6) with a fastening device for the plastic sheet.

5. Device according to claim 4, characterized in that the fastening devices consist of flat connecting blocks (35).

6. Device according to claim 4, characterized in that there are inlet and outlet openings (3 and 4, respectively) in the end strips (5, 6) having the form of horizontal slots.

7. Device according to claim 4, characterized in that it is equipped with a limit switch for the water level (13).

8. Device according to claim 1, characterized in that the container (1) is covered over by a cover which is transparent to ultra-violet light.

9. Device according to claim 8, characterized in that the covering consists of a plastic sheet (2) mounted on a frame.

10. Device according to claim 9, characterized in that optionally, several layers of sheets (2) can be mounted in the frame.

11. Device according to claim 8, characterized in that the covering is supported by excess interior pressure.

12. Device according to claim 1, characterized in that the dark lower side of the sheet hose is colored cobalt blue.

13. Device according to claim 1, characterized in that there are collecting channels in the interior of the container (1) which lead to the exterior and which are arranged along the sides of the container above the water level.

14. Device according to claim 1 with an open-loop or closed-loop control device for currents of liquid material, consisting of devices, such as electrically activated valves, pumps and similar devices, which are connected by lines for liquid material, and a housing (48) surrounding these devices, characterized in that the housing (48) consists of two injection molded shells (49, 50), whereby complementary mold recesses have been formed in the shells (49, 50) in such a manner that they produce lines (51) when the shells (49, 50) are joined.

15. Device according to claim 14, characterized in that sealing cords (52) have been inserted between the shells (49, 50) along the mold recesses.

16. Device according to claim 14, characterized in that a sealing mask cut out to correspond to the mold recesses has been inserted between the shells (49, 50).

17. Device according to claim 1, characterized in that ring grooves have been arranged at the ends of the mold recesses, vertical to the parting surface of the shells, for the insertion of seals.

## Revendications

1. Un dispositif pour chauffer l'eau industrielle au moyen de l'énergie solaire consistant en un réservoir (1) pour l'eau industrielle, fait d'une feuille en matière plastique, avec une prise d'eau (3) pour l'eau froide, avec une soupape d'admission placée avant (10) et avec une ouverture de prise (4); le côté du réservoir (1) qui est tourné vers le haut pendant le fonctionnement est transparent et le côté qui est tourné vers le bas pendant le fonctionnement a une couleur foncée; le trait caractérisé en ce que ce dispositif est qu'une pompe (20) et un clapet anti-retour (21) sont placés après l'ouverture de prise (4) et que la soupape d'admission (10) peut être activée électromagnétiquement et qu'un capteur (18) ayant pour fonction de régler la température souhaitée de l'eau industrielle est relié à la soupape d'admission (10); ce faisant le capteur de température (18) est relié à un dispostif de commande et de réglage (14) qui contrôle la soupape d'admission (10) de telle manière que la qunatité d'eau froide que la soupape d'admission (10) laisse pénétrer dans le réservoir (1) augmente proportionellement à l'augmentation de la températrue de l'eau mesurée à ce moment par le capteur de température (18).

2. Le dispostitif selon la spécification 1, caractérisé en ce que l'ouverture de prise (4) est précédée d'un tuyau flexible (25), passant dans l'intérieur du réservoir (1) et dont le bout libre est relié à un flotteur (24) de telle manière que l'ouverture du tuyau (26) se trouve juste en-dessous de la surface de l'eau (27) dans le réservoir (1).

3. Le dispositif selon la spécification 1, caractérisé en ce qu'un tuyau d'aération (30), étanche, allant à l'extérieur, se trouve dans le réservoir (1) et que l'ouverture libre du tuyau (31) est reliée à un flotteur (29) de telle manière qu'elle se trouve juste au-dessus de la surface de l'eau (27) dans le réservoir (1).

4. Le dispositif selon la spécification 1, caractérisé en ce que les côtés avant du réservoir (1) sont constitués de barres finales (5, 6), rigides et plates avèc un dispositif de fixation pour la fixation pour la feuille en matière plastique.

5. Le dispositif selon la spécification 4, caractérisé en ce que, les dispositifs de fixation sont constitués de barres plates (35).

6. Le dispositif selon la spécification 4, caractérisé en ce que, dans les barres finales (5, 6), se trouvent la prise d'eau ou l'ouverture d'évacuation (3 ou 4 respectivement) et qui ont la forme de fentes horizontales.

7. Le dispositif selon la spécification 4, caractérisé en ce qu'il est équipé d'un commutateur de fin de course de niveau (13).

8. Le dispositif selon la spécification 1, caractérisé en ce que le réservoir (1) est recouvert d'un recouvrement transparent à la lumière ultra-violette.

9. Le dispositif selon la spécification 8, caractérisé en ce que le recouvrement est constitué d'une feuille de matière plastique (2) tendue sur un cadre.

10. Le dispositif selon la spécification 9, caractérisé en ce que, en option, plusieurs couches de feuilles (2) peuvent être tendues dans le cadre.

11. Le dispositif selon la spécification 8, caractérisé en ce que le recouvrement est maintenu par une surpression intérieure.

12. Le dispositif selon la spécification 1, caractérisé en ce que le côté inférieur sombre du tuyau à feuilles est teinté en bleu cobalt.

13. Le dispositif selon la spécification 1, caractérisé en ce que, à l'intérieur du réservoir (1), il y a des canalisations de réception menant vers l'extérieur et qu'elles sont placées le long des parois du réservoir au-dessus du niveau d'eau.

14. Le dispositif selon la spécification 1, avec un dispositif de commande ou de réglage pour les flux de liquides, constitué de dispositifs tels que des soupapes activées électriquement, des pompes et des dispositifs semblables qui sont reliés par des conduites pour liquides et par un boîtier (48) entourant ces dispositifs; le dispositif est caractérisé en ce que le boîtier (48) est constitué de deux coquilles moulées par injection (49, 50) et que des creux du moule complémentaires sont formés dans les coquilles (49, 50) de telle manière qu'ils forment des conduites (51) lorsque les coquilles (49, 50) sont placées ensemble.

15. Le dispositif selon la spécification 14, caractérisé en ce que des cordons étanches (52) ont été insérés le long des creux de moule, entre les coquilles (49, 50).

16. Le dispositif selon la spécification 14, caractérisé en ce qu'un masque étanche évidé, correspondant aux creux de moule, a été placé entre les coquilles (49, 50).

17. Le dispositif selon la spécification 1, caractérisé en ce que sont placées aux bouts des creux de moule des rainures pour anneau de retenue, verticalement par rapport à la surface de séparation des coquilles pour insérer les joints étanches.

Fig. 1

Fig. 2

EP 0 219 566 B1

EP 0 219 566 B1

Fig. 3

Fig. 4

A          C                    Sicht X              6

32    37         37   32

B          D

Sicht Y

Fig. 5

32                    32                    6

Fig. 6

35              6

2

X →        36
           37         ← Y

Schnitt C-D

Fig. 7

6

33

X →              34         ← Y

Schnitt A-B

Fig. 8

38

X

39

Fig. 9

43
44
45
46
47
41

Detail X

Fig. 10

38

40

41

42

EP 0 219 566 B1

Fig. 13

Fig. 11

Fig. 12

53 · 20 · 14 · 21 · 51 · 14 · 13 · 12 · 9 · 48 · 52 · 10 · 9 · 53 · 49 · 50 · XI · XIII · 14